# EUROPEAN PATENT APPLICATION

(11) **EP 4 793 630 A1**
(43) Date of publication of application: **19.08.2026**
(21) Application number: 25170651.1
(22) Date of filing: 15.04.2025
(51) Int. Cl.: G01N 21/65

(54) **RAMAN DETECTING CHIP**

(30) Priority: 12.02.2025 TW 114105138
(71) Applicant: Darwin Precisions Corporation, Hukou Township 303 (TW)
(72) Inventor: Wu, Yu-Hsin, Hukou Township (TW); Wang, Tzu-Hui, Hukou Township (TW); Yang, Ting-Chieh, Hukou Township (TW); Liu, Pang-Chun, Hukou Township (TW); Lin, Jui-Hua, Hukou Township (TW)
(74) Representative: Botti & Ferrari S.p.A.

(57) **Abstract**

A Raman detecting chip includes a carrier and a metal structure arranged on the carrier, wherein the metal structure includes a structured substrate, a metal layer and metal particles. Grooves are formed on the upper surface of the structured substrate and arranged in an array along the X direction and the Y direction. The metal layer is arranged on the rectangular bottom surface and four inclined walls of the groove. The metal particles are all over the metal layer. The bottom edges of the four inclined walls are respectively connected to the four edges of the rectangular bottom surface. In the grooves arranged along the X direction and the Y direction, the top edge of the inclined wall of the groove is connected to the top edge of the inclined wall of the adjacent groove.

## Description

### FIELD OF THE INVENTION

The present invention relates to a Raman detecting chip, particularly to a Raman detecting chip with a highly enhanced uniform structure design.

### BACKGROUND OF THE INVENTION

In recent years, Raman spectroscopy has been widely applied in fields such as biological sensing, medical pharmaceuticals, environmental monitoring, forensic science, and health monitoring. However, during use of the Raman spectroscopy for qualitative identification and quantitative analysis, due to the inherently weak nature of Raman signals, the detection of trace substances faces challenges. The excessively weak signals coupled with susceptibility to interference from complex sample matrices reduce detection sensitivity, leading to significant difficulties in analysis.

Currently, metal structures such as nanoparticles, silver nanoneedles, or nanorods are formed on Raman detecting chips, to enable localized surface plasmon resonance (LSPR), thus achieving a surface-enhanced Raman spectroscopy (SERS) effect. However, the manufacturing of these metal structures primarily relies on LIGA (a German acronym for Lithographie, Galvanoformung, Abformung - lithography, electroplating, and molding) processes involving photolithography techniques or oblique deposition techniques. These processes are complex and time-consuming and produce inconsistent metal structure shapes or particle sizes, resulting in inconsistent Raman signal enhancement effects.

### SUMMARY OF THE INVENTION

The present invention provides a Raman detecting chip, having advantages that the structure type and size of a structured substrate can be controlled and the Raman signal enhancement effect is consistent, and allowing for a simple and quick manufacturing process.

To achieve one or some or all of the above objectives or other objectives, an embodiment of the present invention provides a Raman detecting chip including a carrier and a metal structure. The metal structure includes a structured substrate, a metal layer, and metal particles. The structured substrate is disposed on the carrier, the structured substrate has an upper surface, a plurality of grooves are formed on the upper surface, the grooves are arranged in an array along an X direction and a Y direction, and each groove includes a rectangular bottom surface, a first inclined wall and a second inclined wall opposite each other, and a third inclined wall and a fourth inclined wall opposite each other. The metal layer is disposed on the rectangular bottom surface, the first inclined wall, the second inclined wall, the third inclined wall, and the fourth inclined wall of each groove. The metal particles are all over the metal layer. The rectangular bottom surface of each groove has two opposite first edges and two opposite second edges. The bottom edge of the first inclined wall and a bottom edge of the second inclined wall are connected to the two first edges, respectively, the first inclined wall has a first top edge, and the second inclined wall has a second top edge. A bottom edge of the third inclined wall and a bottom edge of the fourth inclined wall are connected to the two second edges, respectively, the third inclined wall has a third top edge, and the fourth inclined wall has a fourth top edge. Among the grooves arranged along the X direction, the first top edge of each groove is connected to the second top edge of the adjacent groove, and among the grooves arranged along the Y direction, the third top edge of each groove is connected to the fourth top edge of the adjacent groove.

In an embodiment of the present invention, the two first edges of the rectangular bottom surface of each groove have a first bottom width, the first bottom width being between 1 µm and 3 µm, the two second edges of the rectangular bottom surface of each groove have a second bottom width, and the second bottom width is between 1 µm and 3 µm.

In an embodiment of the present invention, the first top edge and the second top edge of each groove have a first opening width, the first opening width being between 2 µm and 7 µm, the third top edge and the fourth top edge of each groove have a second opening width, and the second opening width is between 2 µm and 7 µm.

In an embodiment of the present invention, the first bottom width and the second bottom width are unequal, and the first opening width and the second opening width are unequal.

In an embodiment of the present invention, each groove has a depth, and the depth is between 1 µm and 2 µm.

In an embodiment of the present invention, a ratio of the depth to the first opening width is between 0.3 and 0.6, and a ratio of the depth to the second opening width is between 0.3 and 0.6.

In an embodiment of the present invention, a first angle is formed between the first inclined wall of each groove and the second inclined wall of the adjacent groove, a second angle is formed between the third inclined wall of each groove and the fourth inclined wall of the adjacent groove, and the first angle and the second angle are between 60° and 90°.

In an embodiment of the present invention, the structured substrate is made of a material selected from at least one of polycarbonate (PC), polyethylene terephthalate (PET), and glass.

In an embodiment of the present invention, a material mold liquid is used to cover a structured mold and an ultraviolet-curing replica molding process is used to prepare the structured substrate.

In an embodiment of the present invention, the structured mold is formed by mechanical processing.

In an embodiment of the present invention, the metal layer is a gold layer or a silver layer.

In an embodiment of the present invention, the metal particles are nanogold particles or nanosilver particles.

In an embodiment of the present invention, the metal particles have a particle size between 30 nm and 100 nm.

In the present invention, a structured substrate having uniformly arranged grooves is used, featuring adjustment, based on requirements, of angles between inclined walls of adjacent grooves, the depth of each groove, the first opening width/second opening width of each groove, and the first bottom width/second bottom width of each groove. In this way, the structured substrate has different structural shapes and the combination of the particle size simulation of the metal particles results in optimal enforcement parameters of Raman signals. Therefore, the Raman detecting chip has the advantages that the structure type and size of the structured substrate can be controlled and the uniform arrangement of the grooves results in consistent Raman signal enforcement effects. Additionally, because the structured substrate is formed by performing the mechanical processing on the structured mold used in the ultraviolet-curing replica molding process, the entire Raman detecting chip also has the advantage of a simple and quick manufacturing process.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 is a schematic structural diagram of a Raman detecting chip according to an embodiment of the present invention;
FIGS. 2A and 2B are schematic cross-sectional views of a metal structure in an X direction and a Y direction according to an embodiment of the present invention, respectively;
FIG. 3 is a partial schematic three-dimensional diagram of a structured substrate of a metal structure according to an embodiment of the present invention; and
FIG. 4 is a partial schematic top view of the metal structure according to an embodiment of the present invention.

### DETAILED DESCRIPTION OF PREFERRED EMBODIMENTS

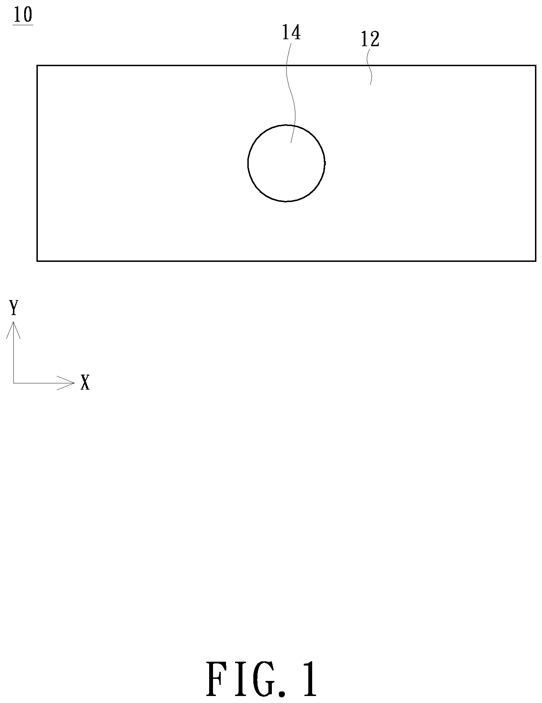

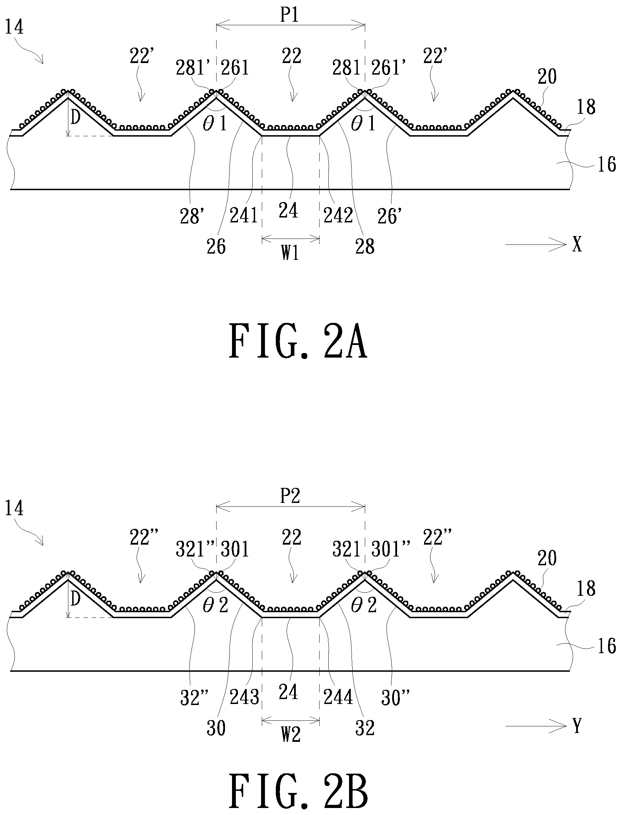

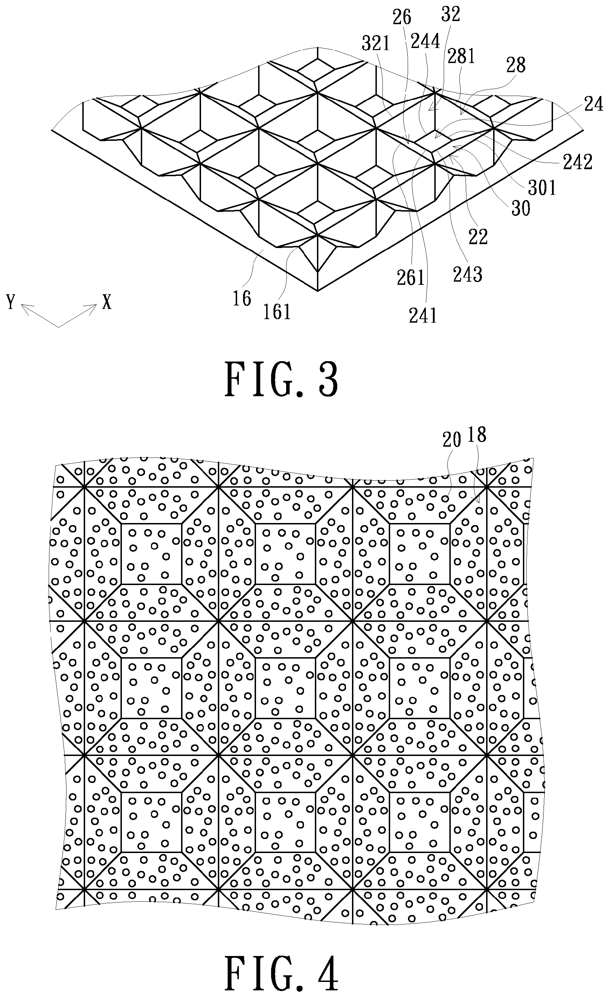

FIG. 1 is a schematic structural diagram of a Raman detecting chip according to an embodiment of the present invention. As shown in FIG. 1, the Raman detecting chip 10 includes a carrier 12 and a metal structure 14. The metal structure 14 is disposed on the carrier 12, for example, in the middle of the carrier 12. FIGS. 2A and 2B are schematic cross-sectional views of a metal structure in an X direction and a Y direction according to an embodiment of the present invention, respectively. As shown in FIGS. 2A and 2B, the metal structure 14 includes a structured substrate 16, a metal layer 18, and a plurality of metal particles 20. The structured substrate 16 is disposed on the carrier 12 (marked in FIG. 1). FIG. 3 is a partial schematic three-dimensional diagram of a structured substrate of a metal structure according to an embodiment of the present invention. With reference to FIGS. 2A, 2B, and 3, the structured substrate 16 has an upper surface 161. A plurality of grooves 22 are formed on the upper surface 161. The grooves 22 are arranged in an array along the X direction and the Y direction. Each groove 22 includes a rectangular bottom surface 24, and a first inclined wall 26, a third inclined wall 30, a second inclined wall 28, and a fourth inclined wall 32 that are adjacent to each other. FIG. 4 is a partial schematic top view of the metal structure according to an embodiment of the present invention. As shown in FIGS. 3 and 4, the metal layer 18 is disposed on the upper surface 161 of the structured substrate 16. Specifically, the metal layer 18 is disposed on the rectangular bottom surface 24, the first inclined wall 26, the second inclined wall 28, the third inclined wall 30, and the fourth inclined wall 32 of each groove 22 (marked in FIG. 3). In an embodiment, the metal layer 18 may be, for example, but is not limited to a gold layer or a silver layer. The metal particles 20 are all over the metal layer 18. In an embodiment, the metal particles 20 may be, for example, but are not limited to nanogold particles or nanosilver particles, and the particle size of the metal particles 20 ranges from 30 nm to 100 nm, for example but not limited to 30 nm, 35 nm, 40 nm, 45 nm, 50 nm, 55 nm, 60 nm, 65 nm, 70 nm, 75 nm, 80 nm, 85 nm, 90 nm, 95 nm, and 100 nm.

Continuing from the above description, specifically, as shown in FIG. 3, the rectangular bottom surface 24 of each groove 22 has two opposite first edges 241 and 242, and two opposite second edges 243 and 244. The first inclined wall 26 and the second inclined wall 28 are opposite each other, and a bottom edge of the first inclined wall 26 and a bottom edge of the second inclined wall 28 are connected to the two first edges 241 and 242 of the rectangular bottom surface 24, respectively. The third inclined wall 30 and the fourth inclined wall 32 are opposite each other, and a bottom edge of the third inclined wall 30 and a bottom edge of the fourth inclined wall 32 are connected to the two second edges 243 and 244 of the rectangular bottom surface 24, respectively. In an embodiment, the first inclined wall 26 has a first top edge 261, the second inclined wall 28 has a second top edge 281, the third inclined wall 30 has a third top edge 301, and the fourth inclined wall 32 has a fourth top edge 321.

Referring again to FIG. 2A, in the grooves 22 and 22' arranged along the X direction, the first top edge 261 of the first inclined wall 26 of each groove 22 is connected to the second top edge 281' of the second inclined wall 28' of the adjacent groove 22'. The second top edge 281 of the second inclined wall 28 of each groove 22 is connected to the first top edge 261' of the first inclined wall 26' of the adjacent groove 22'. As shown in FIG. 2B, in the grooves 22 and 22" arranged along the Y direction, the third top edge 301 of the third inclined wall 30 of each groove 22 is connected to the fourth top edge 321" of the fourth inclined wall 32" of the adjacent groove 22". The fourth top edge 321 of the fourth inclined wall 32 of each groove 22 is connected to the third top edge 301" of the third inclined wall 30" of the adjacent groove 22".

As shown in FIG. 2A, in an embodiment, the two first edges 241 and 242 of the rectangular bottom surface 24 of each groove 22 have a first bottom width W1, and the first bottom width W1 is between 1 µm and 3 µm, for example, but not limited to, 1 µm, 1.2 µm, 1.4 µm, 1.6 µm, 1.8 µm, 2 µm, 2.2 µm, 2.4 µm, 2.6 µm, 2.8 µm, and 3 µm. The first top edge 261 and the second top edge 281 of each groove 22 have a first opening width P1, and the first opening width P1 is between 2 µm and 7 µm, for example, but not limited to, 2 µm, 2.5 µm, 3 µm, 3.5 µm, 4 µm, 4.5 µm, 5 µm, 5.5 µm, 6 µm, 6.5 µm, and 7 µm. A first angle θ1 is formed between the first inclined wall 26/second inclined wall 28 of each groove 22 and the second inclined wall 28'/first inclined wall 26' of the adjacent groove 22', and the first angle θ1 is between 60° and 90°, for example, 60°, 62.5°, 65°, 67.5°, 70°, 72.5°, 75°, 77.5°, 80°, 82.5°, 85°, 87.5°, and 90°. However, this is not limited to these values, and the first inclined wall 26/26' and the second inclined wall 28'/28 may form other acute or obtuse angles. Although FIG. 2A shows a joint between the first inclined wall 26/26' and the second inclined wall 28'/28 as a sharp angle, this is not limited to this form, and the joint between the first inclined wall 26/26' and the second inclined wall 28'/28 may further be an R chamfer shape.

Correspondingly, as shown in FIG. 2B, in an embodiment, the two second edges 243 and 244 of the rectangular bottom surface 24 of each groove 22 have a second bottom width W2, and the second bottom width W2 is between 1 µm and 3 µm, for example, but not limited to, 1 µm, 1.2 µm, 1.4 µm, 1.6 µm, 1.8 µm, 2 µm, 2.2 µm, 2.4 µm, 2.6 µm, 2.8 µm, and 3 µm. The third top edge 301 and the fourth top edge 321 of each groove 22 have a second opening width P2, and the second opening width P2 is between 2 µm and 7 µm, for example, but not limited to, 2 µm, 2.5 µm, 3 µm, 3.5 µm, 4 µm, 4.5 µm, 5 µm, 5.5 µm, 6 µm, 6.5 µm, and 7 µm. A second angle θ2 is formed between the third inclined wall 30/fourth inclined wall 32 of each groove 22 and the fourth inclined wall 32"/third inclined wall 30" of the adjacent groove 22", and the second angle θ2 is between 60° and 90°, for example, 60°, 62.5°, 65°, 67.5°, 70°, 72.5°, 75°, 77.5°, 80°, 82.5°, 85°, 87.5°, and 90°. However, this is not limited to these values, and the third inclined wall 30/30" and the fourth inclined wall 32"/32 may form other acute or obtuse angles. Although FIG. 2B shows a joint between the third inclined wall 30/30" and the fourth inclined wall 32"/32 as a sharp angle, this is not limited to this form, and the joint between the third inclined wall 30/30" and the fourth inclined wall 32"/32 may further be an R chamfer shape.

The rectangular bottom surface 24 may be square or rectangular, meaning the first bottom width W1 and the second bottom width W2 may be equal (square) or unequal (rectangular), and the first opening width P1 and the second opening width P2 may be equal (when the rectangular bottom surface 24 is square) or unequal (when the rectangular bottom surface 24 is rectangular).

Each groove 22 (or 22' or 22") has a depth D, and the depth is between 1 µm and 2 µm, for example, but not limited to, 1 µm, 1.1 µm, 1.2 µm, 1.3 µm, 1.4 µm, 1.5 µm, 1.6 µm, 1.7 µm, 1.8 µm, 1.9 µm, and 2 µm. In an embodiment, the ratio of the depth D to the first opening width P1 (that is, aspect ratio) is between 0.3 and 0.6, for example, but not limited to, 0.3, 0.325, 0.35, 0.375, 0.4, 0.425, 0.45, 0.475, 0.5, 0.525, 0.55, 0.575, and 0.6. The ratio of the depth D to the second opening width P2 (that is, aspect ratio) is between 0.3 and 0.6, for example, but not limited to, 0.3, 0.325, 0.35, 0.375, 0.4, 0.425, 0.45, 0.475, 0.5, 0.525, 0.55, 0.575, and 0.6.

Referring to FIG. 1, in an embodiment, the carrier 12 is made of a material such as but not limited to glass. The structured substrate 16 may be made of a material, which is selected from, for example, at least one of polycarbonate (PC), polyethylene terephthalate (PET), and glass, but not limited to these materials. In an unillustrated embodiment, after a material mold liquid is used to cover a structured mold, an ultraviolet-curing replica molding process is used to prepare the structured substrate 16, where the structured mold is subjected to, for example without limitation to, mechanical processing.

Based on the foregoing description, in the Raman detecting chip in an embodiment of the present invention, the design of uniformly arranging grooves on the structured substrate allows for adjustment, based on requirements, of angles between inclined walls of adjacent grooves, the depth of the groove, the first opening width/second opening width of the groove, and the first bottom width/second bottom width of the groove. In this way, the structured substrate has different structural shapes and the combination of the particle size simulation of the metal particles results in optimal enforcement parameters of Raman signals.

Specifically, as described above, the preferred aspect ratio is between 0.3 and 0.6. According to simulations, within this aspect ratio range, the Raman signal strength is, for example, between 100 and 150, while outside the aspect ratio range, the Raman signal strength is, for example, between 10 and 100. Additionally, within the aspect ratio range of 0.3 to 0.6, a greater aspect ratio indicates stronger Raman signal strength. In addition, a preferred included angle between the inclined walls of adjacent grooves is between 60° and 90°. According to simulations, within this preferred angle range, the Raman signal strength is, for example, between 100 and 150, while outside this preferred angle range, the Raman signal strength is, for example, between 10 and 100.

In summary, the Raman detecting chip in the embodiments of the present invention has the advantages that the structure type and size of the structured substrate can be controlled and the uniform arrangement of the grooves results in consistent Raman signal enforcement effects. Additionally, because the structured substrate is formed by performing the mechanical processing on the structured mold used in the ultraviolet-curing replica molding process, the entire Raman detecting chip also has the advantage of a simple and quick manufacturing process.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A Raman detecting chip (10), comprising:
a carrier (12); and
a metal structure (14), comprising a structured substrate (16), a metal layer (18), and a plurality of metal particles (20), **characterized in that**
the structured substrate (16) is disposed on the carrier (12), the structured substrate (16) has an upper surface (161), a plurality of grooves (22, 22', 22") are formed on the upper surface (161), the grooves (22, 22', 22") are arranged in an array along an X direction and a Y direction, and each of the grooves (22, 22', 22") comprises:
a rectangular bottom surface (24), having two opposite first edges (241, 242) and two opposite second edges (243, 244);
a first inclined wall (26) and a second inclined wall (28) opposite each other, wherein a bottom edge of the first inclined wall (26) and a bottom edge of the second inclined wall (28) are connected to the two first edges (241, 242), respectively, the first inclined wall (26) has a first top edge (261), and the second inclined wall (28) has a second top edge (281); and
a third inclined wall (30) and a fourth inclined wall (32) opposite each other, wherein a bottom edge of the third inclined wall (30) and a bottom edge of the fourth inclined wall (32) are connected to the two second edges (243, 244), respectively, the third inclined wall (30) has a third top edge (301), and the fourth inclined wall (32) has a fourth top edge (321), wherein
among the grooves (22, 22') arranged along the X direction, the first top edge (261) of each of the grooves (22) is connected to the second top edge (281') of the adjacent groove (22'), wherein among the grooves (22, 22") arranged along the Y direction, the third top edge (301) of each of the grooves (22) is connected to the fourth top edge (321") of the adjacent groove (32");
the metal layer (18) is disposed on the rectangular bottom surface (24), the first inclined wall (26), the second inclined wall (28), the third inclined wall (30), and the fourth inclined wall (32) of each of the grooves (20, 22', 22"), and
the metal particles (20) are all over the metal layer (18).

2. The Raman detecting chip (10) according to claim 1, **characterized in that** the two first edges (241, 242) of the rectangular bottom surface (24) of each of the grooves (22) have a first bottom width (W1), the first bottom width (W1) is between 1 µm and 3 µm, the two second edges (243, 244) of the rectangular bottom surface (24) of each of the grooves (22) have a second bottom width (W2), and the second bottom width (W2) is between 1 µm and 3 µm.

3. The Raman detecting chip (10) according to claim 2, **characterized in that** the first top edge (261) and the second top edge (281) of each of the grooves (22) have a first opening width (P1), the first opening width (P1) is between 2 µm and 7 µm, the third top edge (301) and the fourth top edge (321) of each of the grooves (22) have a second opening width (P2), and the second opening width (P2) is between 2 µm and 7 µm.

4. The Raman detecting chip (10) according to claim 3, **characterized in that** the first bottom width (W1) and the second bottom width (W2) are unequal, and the first opening width (P1) and the second opening width (P2) are unequal.

5. The Raman detecting chip (10) according to claim 3, **characterized in that** each of the grooves (22, 22', 22") has a depth (D), and the depth (D) is between 1 µm and 2 µm.

6. The Raman detecting chip (10) according to claim 4, **characterized in that** a ratio of the depth (D) to the first opening width (P1) is between 0.3 and 0.6, and a ratio of the depth (D) to the second opening width (P2) is between 0.3 and 0.6.

7. The Raman detecting chip (10) according to claim 1, **characterized in that** a first angle (θ1) is formed between the first inclined wall (26) of each of the grooves (22) and the second inclined wall (28') of the adjacent groove (22'), a second (θ2) is formed between the third inclined wall (30) of each of the grooves (22) and the fourth inclined wall (32") of the adjacent groove (22"), and the first angle (θ1) and the second angle (θ2) are between 60° and 90°.

8. The Raman detecting chip (10) according to claim 1, **characterized in that** the structured substrate (16) is made of a material selected from at least one of polycarbonate (PC), polyethylene terephthalate (PET), and glass.

9. The Raman detecting chip (10) according to claim 8, **characterized in that** a material mold liquid is used to cover a structured mold, and an ultraviolet-curing replica molding process is used to prepare the structured substrate (16).

10. The Raman detecting chip (10) according to claim 9, **characterized in that** the structured mold is formed by mechanical processing.

11. The Raman detecting chip (10) according to claim 1, **characterized in that** the metal layer (18) is a gold layer or a silver layer.

12. The Raman detecting chip (10) according to claim 1, **characterized in that** the metal particles (20) are nanogold particles or nanosilver particles.

13. The Raman detecting chip (10) according to claim 12, **characterized in that** the metal particles (20) have a particle size between 30 nm and 100 nm.
